# EUROPÄISCHE PATENTANMELDUNG

(11) **EP 4 075 218 A1**
(43) Veröffentlichungstag der Anmeldung: **19.10.2022**
(21) Anmeldenummer: 21168125.9
(22) Anmeldetag: 13.04.2021
(51) Int. Cl.: G05B 19/418

(54) **VERFAHREN, VORRICHTUNG UND SYSTEM ZUM ANPASSEN EINES PRODUKTIONSPROZESSES**

(71) Anmelder: Siemens Aktiengesellschaft, 80333 München (DE)
(72) Erfinder: Lupp, Friedrich, 82131 Gauting (DE); Reisch, Raven Thomas, 81379 München (DE); Schuh, Carsten, 85598 Baldham (DE)

(57) **Zusammenfassung**

Verfahren zum Anpassen eines Produktionsprozesses für ein Produkt, welcher mittels zumindest eines Qualitätsparameters für das Produkt qualifizierbar ist und welcher eine Mehrzahl von Einzelprozessen umfasst,
wobei bei der Mehrzahl von Einzelprozessen zumindest teilweise keine Regelung eingesetzt wird,
mit folgenden Schritten:
a) Erfassen von zumindest einer Messgröße zumindest eines Einzelprozesses ohne eine Regelung;
b) Ermitteln eines der zumindest einen Messgröße entsprechenden Qualitätsparameters;
c) Vergleichen des ermittelten Qualitätsparameters mit einem Sollwert, welcher sich aus dem zu der Messgröße gehörenden Einzelprozess mit einer Regelung ergibt;
d) Evaluierung aus dem Vergleich, ob der Einsatz einer Regelung für den zumindest einen Einzelprozess zu einer Verbesserung des Qualitätsparameters führt.

## Beschreibung

Die Erfindung betrifft ein Verfahren zum Anpassen eines Produktionsprozesses, eine entsprechende Vorrichtung, ein System mit dieser Vorrichtung, ein Computerprogrammprodukt und ein computerlesbares Speichermedium.

In der industriellen Fertigung ist es ein Ziel, Vorgaben eines Kunden bzw. bestimmte Spezifikationen zu erfüllen. Diese Spezifikationen werden oftmals als "critical to quality"-Parameter bzw. CTQs bezeichnet.

Ob diese Spezifikationen erfüllt werden, wird mittels zu definierender Charakteristika ermittelt, die einen Einfluss auf die Qualität des Endprodukts, Zwischenprodukts, einer Komponente oder eines Fertigungsschrittes für eine Komponente haben.

Zur Erfüllung der Spezifikationen oder auch Optimierung eines Prozesses werden oft Regelkreise oder Regelungen für einen Prozess oder Prozessschritt eingesetzt, durch welche ein Ausgangswert, z.B. eine bestimmte Temperatur, auch dann so gut wie möglich beibehalten wird, wenn ein störender Einfluss, z.B. eine wechselnde Umgebungstemperatur vorliegt. Dazu wird innerhalb des Regelkreises in festgelegten zeitlichen Abständen ein Sollwert, z.B. die gewünschte Temperatur mit einem Istwert, z.B. der tatsächlich gemessenen Temperatur verglichen. Aus der Abweichung oder Regeldifferenz wird eine Stellgröße ermittelt, welche den Prozess oder Prozessschritt so beeinflusst, dass die Abweichung nach einer gewissen "Einstellzeit" bzw. im eingeschwungenen Zustand ein Minimum einnimmt.

Der Regelkreis umfasst einzelne Regelkreisglieder wie Regler und Regelstrecke, die jeweils ein Zeitverhalten haben. Dies kann eine korrekte Einstellung schwierig machen, allerdings führen falsch eingestellte Regler dazu, dass der Regelkreis nicht entsprechend funktioniert, z.B. nicht ausreichend schnell ist, zu einer großen Regelabweichung führt oder auch zu ungedämpften Schwingungen der Regelgröße, welche Komponenten des Regelkreises zerstören können oder zumindest einen Fertigungsprozess oder Schritt nicht verbessern. Daher muss die Entscheidung, ob ein Regelkreis eingesetzt wird, anhand der vorliegenden Information sorgfältig getroffen werden.

Ausgehend davon ist es Aufgabe der Erfindung, eine Verbesserung von Fertigungs- oder Produktionsprozessen vorzuschlagen.

Dies wird gelöst durch ein Verfahren gemäß Anspruch 1. Vorteilhafte Weiterbildungen sind Gegenstand der anhängigen Ansprüche.

Ein Produkt wird mittels eines Produktionsprozesses gefertigt, der zumindest einen Einzel- oder Teilprozess umfasst, in dem keine Regelung eingesetzt ist. Bei dem Produkt kann es sich um ein Zwischen- oder Endprodukt handeln.

Das Produkt ist durch zumindest einen Qualitätsparameter qualifizierbar, beispielsweise ein bestimmtes "Fenster", das durch einen oder mehrere Qualitätsparameter oder CTQs festgelegt ist. Beispielsweise ist die Dimension des "Fensters", also ob es sich um eine Strecke, ein Rechteck oder einen Quader oder höherdimensionale Figur handelt, ist durch die Anzahl der CTQs festgelegt. Ein Qualitätsparameter kann also aus einem oder mehreren einzelnen Qualitätsparametern oder CTQs gebildet werden.

Für zumindest einen Einzelprozess ohne Regelung wird eine Messgröße aus diesem Einzelprozess erfasst. Beispielsweise kann es sich also auch um eine Gruppe von Einzelprozessen handeln.

Eine Messgröße kann ein einfacher Messwert eines Sensors wie eine Temperatur oder eine Depositionsrate sein. Alternativ oder zusätzlich kann eine Messgröße einen zeitlichen oder spektralen Verlauf umfassen oder Werte enthalten, die aus einer oder mehreren Sensordaten abgeleitet sind.

Die Messgröße kann sich auf einen Einzelprozess oder eine Gruppe von Einzelprozessen beziehen.

Es wird ein dieser Messgröße entsprechender Qualitätswert oder Qualitätsparameter ermittelt aus dem realen Produktionsprozess, also wenn keine Regelung für den Einzelprozess vorgesehen ist.

Dieser Qualitätsparameter wird mit einem Sollwert verglichen, der sich ergibt, wenn der Einzelprozess, aus dem die Messgröße stammt, mit einer Regelung durchgeführt wird.

Gemäß einer vorteilhaften Ausführung wird dieser Sollwert mittels einer Simulation bestimmt, in der der Einzelprozess oder die Gruppe von Einzelprozessen unter der Annahme des Vorliegens einer Regelung simuliert wird.

Aus diesem Vergleich wird abgeleitet, ob der Einsatz einer Regelung für den Einzelprozess zu einer Verbesserung des Qualitätsparameters führt.

Gemäß einer vorteilhaften Ausführung wird dieses Ergebnis im Produktionsprozess implementiert, d.h. also im Falle einer hinreichenden Verbesserung eine Regelung eingeführt oder der Produktionsprozess beibehalten, wenn keine oder keine hinreichende Verbesserung auftritt. Ob eine Verbesserung hinreichend ist, wird beispielsweise anhand einer Kosten- /Nutzenanalyse ermittelt, in welcher die Kosten für eine Regelung den erwarteten Einsparungen und Verbesserungen des Produkts gegenübergestellt werden.

Gemäß einer ersten vorteilhaften Ausführung wird der Qualitätsparameter aus einer Analyse des Produkts ermittelt, beispielsweise werden ein oder mehrere CTQs für das End- oder auch ein Zwischenprodukt bestimmt. Der Sollwert wird aus einer Simulation zumindest eines Einzelprozesses ermittelt, bei dem eine Regelung implementiert ist und die Messgröße oder Messgrößen als Parameter verwendet werden. Alternativ oder zusätzlich erfolgt die Simulation, insbesondere eine gemeinsame Simulation, für eine Gruppe von Einzelprozessen. So kann ein simulierter Qualitätsparameter für den Einzelprozess oder- wenn die Simulation auch weitere Einzelprozesse mit umfasst- für Gruppen von Einzelprozessen oder den Gesamtprozess abgeleitet werden. Dieser simulierte Qualitätsparameter wird dann als Sollwert verwendet und es kann damit festgestellt werden, ob der reale Qualitätsparameter aus einem Produktionsprozess ohne Regelung oder der simulierte Qualitätsparameter aus einem fiktiven Produktionsprozess mit Regelung günstiger ist und dementsprechend eine Regelung vorteilhafterweise implementiert werden sollte oder nicht.

Vorteile dieser Ausführung sind insbesondere, dass der Simulationsprozess mit der realen Produktion zeitlich parallel und auch verzahnt abläuft. So kann während des Produktionsprozesses eine Analyse durchgeführt werden, bei der auch aktuelle Daten des Produktionsprozesses zugrunde gelegt sind. Dies ermöglicht es ohne Zeitverlust zu entscheiden, ob eine Regelung in den Produktionsprozess eingeführt wird, ohne dass Kosten für die Implementierung anfallen oder dass Kosten für eine aufwändige Modellierung und Simulation des gesamten Produktionsprozesses anfallen, wie dies etwa bei einem sogenannten "digital twin" der Fall wäre.

Gemäß einer weiteren vorteilhaften Ausführung wird aus den Messgrößen ein Qualitätsparameter abgeleitet, der eine Zuordnung des Einzel- oder Teilprozesses zu vorhandenen Daten ermöglicht, z.B. einer Datenbank, die Erfahrungswerte früherer Implementierungen beinhaltet. Diese vorhandenen Daten beinhalten einen Sollwert, der angibt, ob eine Regelung für den Teilprozess vorteilhaft ist oder nicht, d.h. zu einer Verbesserung des Qualitätsparameters führt, so dass eine entsprechende Entscheidung über die Implementierung einer Regelung getroffen werden kann.

Weitere Vorteile werden anhand beispielhafter Ausführungsformen erläutert, die teilweise in den Figuren dargestellt sind.

Es zeigen:
Fig.1 eine beispielhafte Ausführung des Verfahrens zur Anpassung eines Produktionsprozesses;
Fig.2 eine beispielhafte Ausführung einer Vorrichtung zur Durchführung des Verfahrens zur Anpassung eines Produktionsprozesses;
Fig.3 einen Verlauf des Stroms gegenüber der Zeit für das Werkstück aus Fig.4;
Fig.4 ein mittels Wire Arc Additive Manufacturing (WAAM) hergestelltes Produkt und
Fig. 5 ein Kantelement, welches mittels einer Laser Metal Deposition (LMD) ohne Regelung (linke Seite) und mit Regelung (rechte Seite) erstellt wurde.

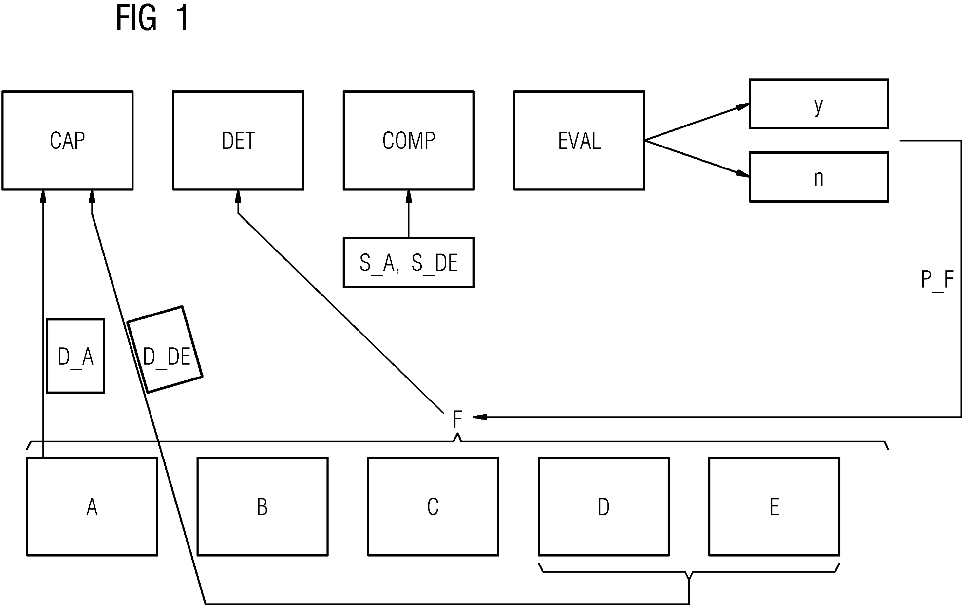

In Fig. 1 ist ein beispielhafter Fertigungsprozess F dargestellt, der eine Vielzahl von Einzelprozessen umfasst. In Fig. 1 sind Einzelprozesse A bis E dargestellt.

Die Zerlegung des gesamten Fertigungsprozesses in Einzelprozesse erfolgt unter Berücksichtigung, welche Einzelprozesse oder Prozesscluster für eine gewünschte Eigenschaft, z.B. eine Kundenspezifikation oder andere Anforderung an die Produktion, z.B. bei vorgegebener oberer Grenze von Ausschuss kritisch sind. Alternativ oder zusätzlich werden Gruppen von Einzelprozessen betrachtet, die für eine gewünschte Eigenschaft, welche z.B. durch die Eigenschaften der einzelnen Prozesse beeinflusst wird, relevant sind.

Für das Beispiel eines mittels WAAM (Wire Arc Additive Manufacturing) hergestellten Bauteils lässt sich der gesamte Fertigungsprozess in eine Materialdeposition zum Erstellen des Rohlings, eine thermische Behandlung zur Beeinflussung der Materialstruktur und ein Nachbearbeiten, beispielsweise durch Fräsen mit geeigneten Werkzeugen, insbesondere Mikro-Werkzeugen einteilen.

Alternativ oder zusätzlich erfolgt die Zerlegung so, dass geprüft wird, ob der jeweilige Einzelprozess oder Gruppe von Einzelprozessen zum Aufbau einer Regelstrecke geeignet ist.

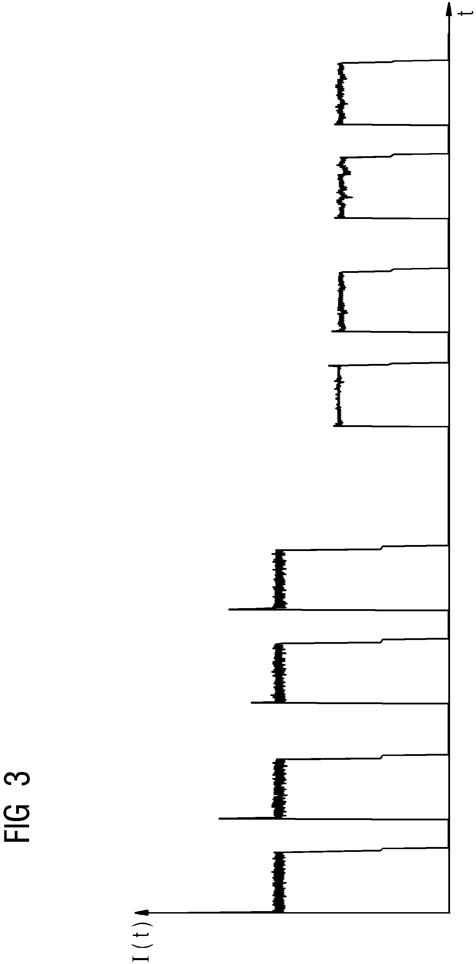

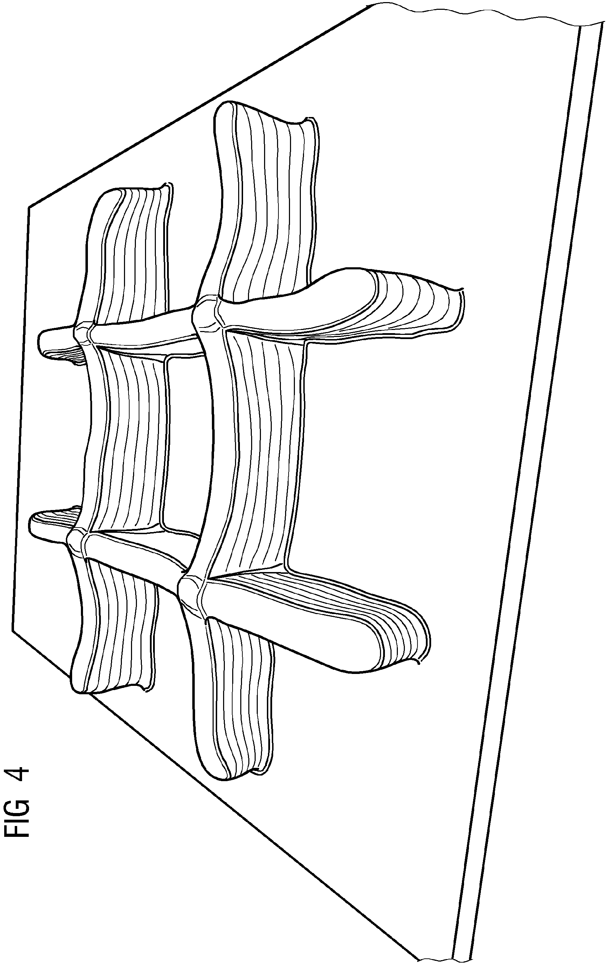

Als Beispiel hierfür ist in Fig. 4 ein mittels WAAM hergestelltes Werkstück gezeigt und der entsprechende Stromverlauf für den Schweißkopf in Fig. 3. Man erkennt zum einen, dass das Stromprofil Rechtecke aufweist, wobei jedes Rechteck einem Strang des in Fig. 4 gezeigten Werkstücks entspricht, da nur bei Stromfluss Material deponiert werden kann. Weiterhin erkennt man Spikes zu Beginn eines jeden rechteckigen Stromverlaufs, da sich hier der Lichtbogen erst ausbildet. In der zweiten Serie von Rechtecken auf der rechten Seite erkennt man Bereiche mit abgesenktem Strom, die den Knotenpunkten von senkrechten und waagrechten Strängen entsprechen. Bei den Knotenpunkten ist der Abstand des Werkstücks zum Schweißbrenner, resultierend im sogenannten "Stickout", d.h. Länge des herausstehenden Drahtes, geringer, es wird also weniger Strom benötigt. Eine Regelung ist hier aufgrund der geringeren Geschwindigkeit günstig, als Regelgröße kann ein Abstand des Schweißbrenners zum Werkstück herangezogen werden.

Als Regelstrecke bezeichnet man denjenigen Teil eines Regelkreises oder Regelung, der die zu regelnde Größe, also die Regelgröße, enthält, auf die der Regler über die Stellgröße wirken soll.

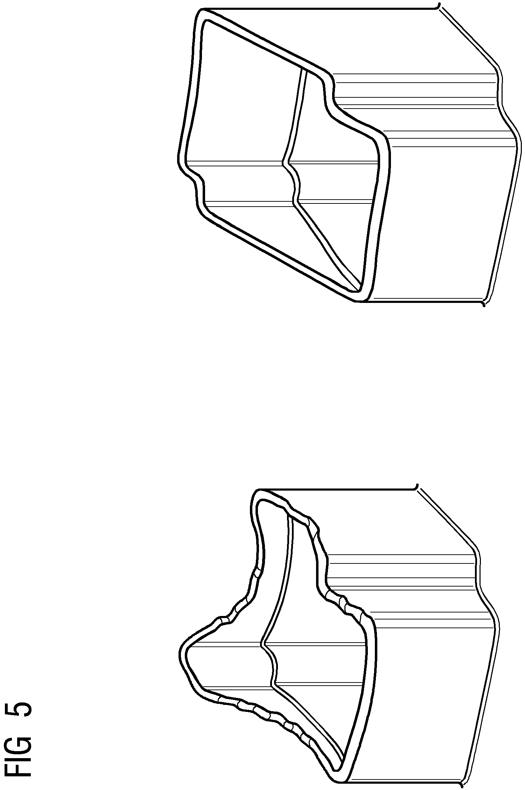

Mögliche Vorteile einer Regelung sind anhand eines mittels Laser Metal Deposition (LMD) hergestellten Produkts in Fig.5 zu erkennen. Das Kantelement auf der linken Seite, welches mittels einer Laser Metal Deposition (LMD) ohne Regelung erstellt wurde, weist Überhöhungen an den Ecken auf und erniedrigten Materialdeposition im Bereich der Mitte der Kanten. Eine dem gewünschten Profil entsprechende Materialdeposition konnte in dem Werkstück auf der rechten Seite mittels einer Regelung erzielt werden.

In einem Produktionsprozess kann als Regelgröße beispielsweise die Umgebungstemperatur der Produktionsanlage herangezogen werden. Weiterhin können als Regelgrößen ein Füllstand eines Behälters mit Material, das bei einem Depositions-, Schweiß- oder Gussverfahren eingesetzt wird, oder etwa die Position eines Lasers, der für ein Laserdepositionsverfahren eingesetzt wird, verwendet werden.

Für das Beispiel des WAAM Prozesses lässt sich für die Materialdeposition eine Regelung für den Abstand des Schweissbrenners zum zu beschichtenden Rohling implementieren, wodurch eine Auftragsrate festgelegt werden kann oder auch verhindert werden kann, dass Schweissbrenner und zu bearbeitender Rohling zusammenstoßen, wie auch bereits erläutert. Für die thermische Behandlung lässt sich die Temperatur des Rohlings regeln, die für die Strukturbildung relevant ist.

Mathematisch kann eine Regelung mittels einer Übertragungs- oder Transferfunktion beschrieben werden.

Aus der Gesamtzahl der Einzelprozesse und/oder Prozesscluster bzw. Gruppen werden für eine Regelung geeignete Einzelprozesse bzw. Gruppen von Prozessen ausgewählt. In Fig 1. besteht diese Auswahl aus dem Einzelprozess A und einer Gruppe bestehend aus den Einzelprozessen D und E, bei denen im Fertigungsprozess F keine Regelung vorgesehen ist.

Für diese Auswahl von Einzelprozessen werden Daten D_A, D_DE erfasst, welche die Qualität eines End- oder Zwischenprodukts beeinflussen können, also "CTQ"-relevant sind. Beispielsweise kann ein etablierter, d.h. gut erprobter, Bohrprozess nicht CTQ relevant sein, weil er so durchgeführt werden kann, dass er sicher ohne Qualitätseinbußen am Produkt durchgeführt werden kann.

Es wird also festgelegt, welche Daten D_A des Einzelprozesses A oder/und welche Daten D_DE der Gruppe von Prozessen D,E im Schritt CAP erfasst werden, beispielsweise von einer Kontrolleinheit abgefragt oder an diese geleitet werden, damit aus ihnen ein simulierter Qualitätsparameter, wobei für diese Simulation ein Regelungsverfahren verwendet wird, ermittelt werden kann. Bei den Daten D A bzw. D DE handelt es sich um eine oder mehrere Messgrößen aus dem Einzelprozess A bzw. der Gruppe von Einzelprozessen D, E oder aus den Messgrößen bzw. Messwerten abgeleitete Größen.

Im Schritt DET wird anhand dieser Daten D_A, D_DE ein dieser oder diesen Messgrößen entsprechender Qualitätswert oder Qualitätsparameter ermittelt. Dieser Qualitätswert wird oft als CTQ bezeichnet. Es wird ein CTQ für den Einzelprozess A oder die Gruppe von Einzelprozessen D, E ermittelt. Alternativ oder zusätzlich kann ein CTQ für eine Kombination aus Einzelprozessen oder/und Gruppen von Einzelprozessen ermittelt werden. Beispielsweise kann aus einem ersten CTQ, der den zulässigen Gehalt an Sauerstoff beschreibt zusammen mit einem zweiten CTQ, beispielsweise einem verwendeten Aufdampfmaterial mit entsprechender Reinheit, ein kombinierter CTQ, beispielsweise eine bestimmte Struktur des aufgebrachten Materials oder eine bestimmte Reinheit des aufgebrachten Materials bestimmt werden.

Im Schritt COMP wird dieser ermittelte Qualitätswert mit für die jeweiligen Prozesse simulierten Qualitätswerten verglichen. Diese Simulation erfolgt unter der Annahme einer Regelung für den jeweiligen Einzelprozess. Fig. 1 zeigt den simulierten Qualitätsparameter S_A für den Einzelprozess A und den simulierten Qualitätsparameter S_DE für die Gruppe D und E von Einzelprozessen.

Aus dem Vergleich COMP zwischen dem unter der Annahme einer Regelung simuliertem Qualitätsparameter S_A, S_DE und dem tatsächlich aus dem Fertigungsprozess F vorliegenden Prozessparameter, bei dem im betreffenden Einzelprozess keine Regelung vorlag, kann dann in einem Evaluationsschritt EVAL ermittelt werden, ob eine Regelung vorteilhaft ist oder nicht. Es wird also ein Vorschlag P_F für den Fertigungsprozess F erstellt, ob die Einführung eines Reglers Vorteile bietet oder nicht.

In Fig.5 ist links ein Werkstück zu sehen, bei dem das Material mittels eines Laser Metal Deposition (LMD) Prozesses ohne Regelung deponiert wurde. Man erkennt deutlich Überhöhungen an den Ecken. Auf der rechten Seite wird der gewünschte gleichmäßige Anstieg mit einer Regelung zuverlässiger erreicht, eine Regelung ist also von Vorteil, wenn das Profil eine CTQ darstellt, eine Abweichung davon also dazu führen würde, dass das Werkstück ausgesondert werden müsste.

Bei den Daten D_A, D_DE kann es sich insbesondere um Sensorwerte handeln, die im Zusammenhang mit dem Einzelprozess aufgenommen wurden. Im Falle eines Depositionsprozess numerische Daten wie die Depositionsrate, Temperatur des zu beschichtenden Targets, Druck im Aufdampfkessel. Alternativ oder zusätzlich kann es sich auch um komplexere Information wie ein Spektrum mit dem quantitativen Anteil an Verunreinigungen, z.B. Kohlenstoff, handeln.

Für das Beispiel des WAAM kann mittels der Spektrometerdaten festgestellt werden, ob der O₂ Anteil erhöht ist und daher ggf. die Schutzgaszufuhr erhöht werden muss.

Alternativ oder zusätzlich umfassen die Daten Parameter, die im betreffenden Einzelprozess A oder Gruppe von Prozessen D, E Verwendung finden. Beispielsweise handelt es sich um die Stromstärke, mit der die Elektronenstrahlkanone für den Aufdampfprozess betrieben wird. Alternativ oder zusätzlich handelt es sich um einen Stromverlauf über der Zeit für den Betrieb der Elektronenstrahlkanone.

Es erfolgt nun ein Realbetrieb der Prozesskette mit den Einzelprozessen A bis E. Aus zumindest einem dieser Einzelprozessen oder/und zumindest einer Gruppe von Einzelprozessen werden relevante Daten oder/und Parameter an ein "Edge Device" übermittelt, d.h. von diesem abgefragt oder an dieses übertragen.

Bei einem Edge Device handelt es sich um eine Netzwerkkomponente, mittels der ein Zugriff auf Daten eines Netzwerks ermöglicht wird. Im Beispiel des Fertigungsprozesses also um eine Komponente, die auf Daten im Fertigungsprozess, dessen einzelne Schritte bzw. die dazu verwendeten Komponenten zumindest teilweise mittels eines Netzwerks zugreifen kann.

Insbesondere kann es sich bei dem Edge Device um Router, also eine Komponente, die Datenpakete in einem Netzwerk in zumindest ein anderes Netzwerk weiterleiten können, Gateways, also Komponenten für eine Vermittlung zwischen 2 Systemen, oder Server, also eine Komponente, welche Ressourcen für andere Komponenten zur Verfügung stellt, handeln. Alternativ oder zusätzlich kann es sich bei dem Edge Device um ein virtuelles Device bzw. virtuelle Maschine handeln, d.h. um eine auf einem Rechnersystem generiertes Rechnersystem, das von dem ursprünglichen abgekapselt ist. Diese virtuelle Maschine kann in einer Cloud, also einer IT-Infrastruktur, welche über ein Netzwerk, beispielsweise das Internet, verfügbar gemacht wird, realisiert werden oder auf einem Rechner, beispielsweise einem PC, welcher sich in dem Netz befindet, oder zu dem Netz Zugang hat, in dem sich auch die im Fertigungsprozess verwendeten Maschinen befinden.

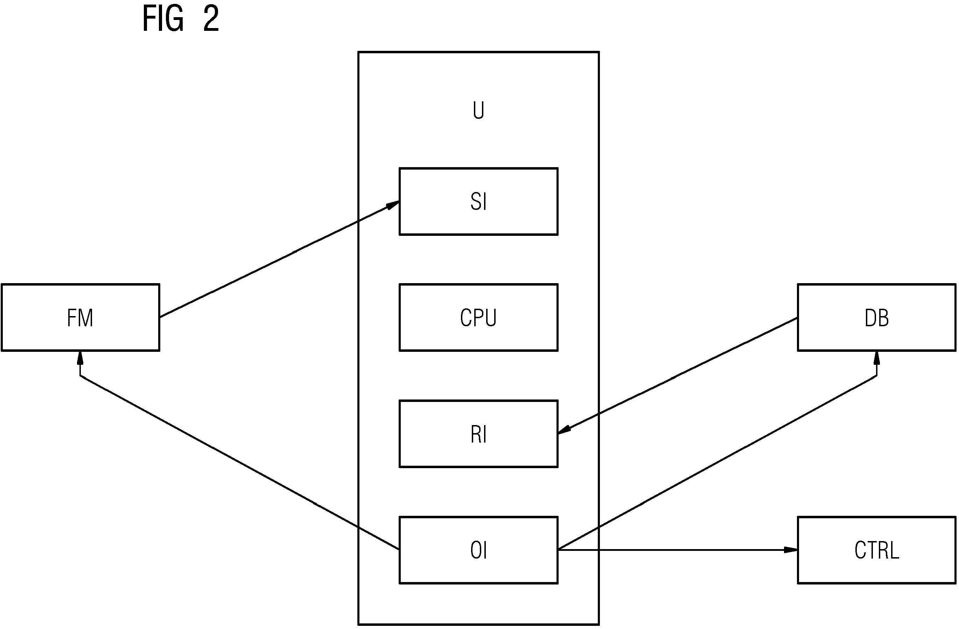

Im in Fig. 1 gezeigten Beispiel werden Daten D_A aus dem Einzelprozess und Daten D_DE der Gruppe D, E von Prozessen mittels der in Fig. 2 gezeigten Einrichtung U erfasst. Bei der Einrichtung U kann es sich beispielsweise um einen Controller für produktionstechnische Anlagen, beispielsweise eine SIMATIC S7-1500 handeln, oder die Einrichtung U ist vorteilhafterweise in einem virtuellen Gerät realisiert oder/und kann mit diesem über eine Kommunikationsschnittstelle kommunizieren. Dies hat den Vorteil, dass Fertigungsmaschinen bei einem Produzenten betrieben werden können. Dieser hat über eine Kommunikationsverbindung Kontakt zu einer Infrastruktur, auf der das Edge Device realisiert wird, welches wiederum Zugriff auf Services einer Datenbank DB oder Cloud C hat, mit Hilfe derer Transferfunktionen ermittelt oder Simulationen durchgeführt werden können.

Auf dem Edge Device, welches in Verbindung mit der in Fig. 2 gezeigten Einrichtung U steht, erfolgt eine Simulation einer Regelung der ausgewählten Prozesse A und D, E oder eines Teils hiervon unter Verwendung zumindest eines Teils der übermittelten Daten oder/und Parameter. Die Regelung basiert beispielsweise auf einer bereits vorhandenen Transferfunktion für einen bestehenden, ähnlichen Prozess oder Teilprozess. Unter Transferfunktion für die Regelung wird der mathematische Zusammenhang zwischen Eingangssignal für den Prozess/ Teilprozess und dem Ausgangssignal verstanden. Für eine Vielzahl von Regelungsprozessen liegen bereits Transferfunktionen vor, die dann für den individuellen Regelungsprozess angepasst werden. Übliche Modellierungsprogramme wie MATLAB bieten Möglichkeiten bzw. Tools, eine Feineinstellung der Parameter im Regelkreis durchzuführen. Alternativ oder zusätzlich kann diese Feineinstellung beispielsweise durch maschinelle Lernmethoden wie sogenanntes Deep Learning oder auf Modellebene durch Meta Learning oder Transfer Learning erzielt werden.

Die Simulation einer Regelung für zumindest einen ausgewählten Teilprozess erfolgt zeitlich parallel zum laufenden Fertigungsprozess, ohne jedoch in diesen einzugreifen. Die Simulation beinhaltet auch, wie sich die Regelung auf vorhergehende oder nachfolgende Einzelprozesse auswirkt, also auf das Betriebsverhalten der Prozesskette insgesamt.

Es wird nun während des laufenden Fertigungsprozesses die durch diesen real generierten Prozessdaten bzw. -parameter mit den Daten bzw. Parametern aus der Simulation verglichen. Zum Vergleich eignen sich dabei besonders die Qualitätsparameter oder CTQs, da hieraus direkt geschlossen werden kann, ob der Prozess mit Regelung - also durch die Simulation generierten Daten - oder ohne Regelung - wie im realen Fertigungsprozess - besser für die Fertigung geeignet ist.

Im Beispiel des Aufdampfprozesses wird beispielsweise die Zeit verglichen, die benötigt wird, um die vorgesehene Schichtdicke zu erreichen sowie die Qualität der erzeugten Schicht. Die Qualität kann beispielsweise durch eine nachfolgende Röntgenstrukturanalyse bestimmt werden, beispielsweise ob der Schichtaufbau epitaktisch ist oder/und welche Fremdkörper, z.B. aus dem Tiegel für das Aufdampfmaterial, eingebaut wurden.

Es kann damit festgestellt werden, ob einzelne oder Gruppen von Parametern mit oder ohne Verwendung des oder der betreffenden Regelprozesse eher dem gewünschten Ergebnis entsprechen. Damit können Schwachstellen identifiziert werden, also welche Einzelprozesse sehr empfindlich gegenüber auftretenden Störeinflüssen sind und daher einer Regelung bedürfen oder einen Reglerausschlag bzw. eine Stellgröße verschieden von Null herbeiführen würden. Weiterhin kann quantitativ untersucht werden, ob die Verwendung einer Regelung Verbesserungen im betrachteten Fertigungsprozess herbeiführen würde.

Insbesondere kann auch anhand des gefertigten Produkts festgestellt werden, welcher Anteil des Produktionsergebnisses außerhalb des zulässigen Fensters für Qualitätsparameter liegen würden. Wie beschrieben, wird dieses Fenster über sogenannte CTQs bzw. "critical to quality" bzw. qualitätskritische Merkmale beschrieben. Diese CTQs sind also erfassbar, z.B. messbar, und müssen erfüllt werden, um beispielsweise Kundenspezifikationen zu genügen. Mit den CTQs können bestimmte Bereiche bzw. Fenster definiert werden, in denen dies der Fall ist. Aus einem oder mehreren CTQs können Qualitätsparameter gebildet werden.

Damit kann auch eine Ausschussrate eines End- oder Teilprodukts im Prozess ohne Verwendung des oder der betreffenden Regler ermittelt und mit der Ausschussrate verglichen werden, die in einem Prozess mit Regler aufgetreten wären, sowie die damit verbundenen Kosten.

Alternativ oder zusätzlich kann die erforderliche Maschinenzeit oder Materialkosten unter Berücksichtigung der zusätzlichen Kosten für den oder die Regelkreise verglichen werden.

In Abhängigkeit von diesem Vergleich wird ein Konzept erstellt, einen oder mehrere Regelprozesse in den Fertigungsprozess zu implementieren und optional ein oder mehrere Regelprozesse tatsächlich implementiert.

In Fig.2 ist ein System mit einer Vorrichtung U zur Durchführung des Produktionsverfahrens dargestellt. Beispielsweise handelt es sich bei der Vorrichtung um ein Edge Device.

Auf zumindest einer Fertigungsmaschine FM wird zumindest ein Einzelprozess des gesamten Produktionsprozesses durchgeführt. Diese Fertigungsmaschine FM enthält zumindest einen Sensor und tauscht Messgrößen D_A, D_DE aus dem entsprechenden oder der Gruppe der entsprechenden Einzelprozesse aus oder entsprechende daraus abgeleitete Daten mit der Vorrichtung U aus. Zur Erfassung ist in der Vorrichtung U eine Sensorschnittstelle SI vorgesehen. In einer Prozessoreinheit CPU werden die aus den Messgrößen ermittelten tatsächlichen Qualitätswerte mit unter Annahme einer Regelung simulierten Qualitätswert oder Sollwert verglichen. Dieser Sollwert kann über eine Empfangsschnittstelle RI empfangen werden oder alternativ von der Vorrichtung U, beispielsweise in der Prozessoreinheit CPU, selbst berechnet werden. Der Sollwert und weitere Information kann hierbei mit einem internen oder externen Datenspeicher DB, beispielsweise einer Datenbank eines Anbieters für Produktionsprozesse, welcher in einer Cloud abgelegt sein kann, ausgetauscht werden. Bei der weiteren Information handelt es sich insbesondere auch um eine Transferfunktion für eine Regelung. Über eine Ausgabeschnittstelle OI kann dann ein entsprechender Vorschlag für die Änderung oder Beibehaltung des Produktionsprozesses ausgegeben werden und optional, insbesondere zusammen mit einer Implementierung der Regelung an die Fertigungsmaschine FM oder eine zentrale Produktionskontrolle, beispielsweise ein Tool CTRL für die Erstellung oder Optimierung von Produktionsprozessen, oder auch an den externen Datenspeicher DB zur weiteren Verarbeitung ausgegeben werden. Bei dem Tool CTRL kann es sich um eine Software als SAAS (software as a service) handeln, welche beim Kunden oder beim Anbieter der Software läuft.

Gemäß einer anderen, nicht dargestellten Ausführungsform wird eine CAD/CAM Software oder eine Regelung für eine Technologie wie z.B. Fräsen, Drehen, WAAM (Wire Arc Additive Manufacturing), LMD (Laser Metal Deposition) für einen Produzenten/Anbieter eines CAD (Computer Aided Design) -Bauteils und zugehörigen CAM (Computer Aided Manufacturing) -Operationen angeboten.

Es erfolgt eine Bauteil- und Operationsanalyse neuer Bauteile hinsichtlich kritischer Bereiche, wie z.B. T-Stöße, d.h. die Vereinigung zweier Schweißteile in T-Form, Füllstrukturen, etc. Daraus ergeben sich die zu erfassenden Messgrößen.

Aus den Messgrößen, beispielsweise wieder den Messgrößen D_A oder D_DE, wird ein Qualitätswert abgeleitet, beispielsweise eine Identifizierung des betreffenden Einzelprozesses A anhand des Prozesstyps, z.B. "Materialdeposition", und der verwendeten Komponenten, z.B. "Schweißbrenner Typ X" oder "Elektronenstrahlkanone Typ Y".

Dies ermöglicht eine Zuordnung zu vorhandenen Daten in einer Datenbank, die Erfahrungswerte früherer Implementierungen beinhaltet. Die vorgegebenen Werte S_A für den Einzelprozess A oder/und vorgegebene Werte S_DE für die Gruppe D, E von Einzelprozessen werden also gemäß dieser Ausführungsform aus einer Datenbank bezogen, welche Information zu Prozessen oder/und Bauteileigenschaften mit hohem Reglerbedarf beinhaltet. Solche Prozesse bzw. Bauteile führen überdurchschnittlich häufig zu den genannten "Out-of-CTQs" bzw. zu Ausschuss. Die Daten der Datenbank basierend auf Erfahrungswerten, z.B. durch real implementierte Regler für die entsprechende Technologie, Bauteil oder Prozess.

Diese Daten umfassen beispielsweise einen Sollwert S_A, der angibt, ob eine Regelung für den Teilprozess vorteilhaft ist oder nicht, d.h. zu einer Verbesserung des Qualitätsparameters führt.

Auch wenn die Erfindung in Zusammenhang mit spezifischen bevorzugten Ausführungsbeispielen, insbesondere in Bezug auf WAAM oder andere Depositionsverfahren beschrieben wurde, ist es für den Fachmann entnehmbar, dass Kombinationen oder Modifikationen hiervon, sei es vollständig oder in einzelnen Aspekten, für alle Ausführungsbeispiele möglich sind. Insbesondere ist auch eine Anwendung für andere Produktionsprozesse, beispielsweise chemische oder mechanische Verfahren vorgesehen. Entsprechende Qualitätsparameter können hier beispielsweise die Reinheit eines Stoffes, Reaktionsparameters, mechanische Beschaffenheiten wie Belastbarkeit etc. sein.

## Patentansprüche

1. Verfahren zum Anpassen eines Produktionsprozesses (F) für ein Produkt, welcher mittels zumindest eines Qualitätsparameters für das Produkt qualifizierbar ist und welcher eine Mehrzahl von Einzelprozessen (A,B,C,D,E) umfasst,
wobei bei der Mehrzahl von Einzelprozessen (A,B,C,D,E) zumindest teilweise keine Regelung eingesetzt wird,
mit folgenden Schritten:
a) Erfassen (CAP) von zumindest einer Messgröße (D_A, D_DE) zumindest eines Einzelprozesses (A,B,C,D,E) ohne eine Regelung;
b) Ermitteln (DET) eines der zumindest einen Messgröße (D_A, D_DE) entsprechenden Qualitätsparameters;
c) Vergleichen (COMP) des ermittelten Qualitätsparameters mit einem Sollwert (S_A, S_DE), welcher sich aus dem zu der Messgröße gehörenden zumindest einen Einzelprozess mit einer Regelung ergibt;
d) Evaluierung (EVAL) aus dem Vergleich, ob der Einsatz einer Regelung für den zumindest einen Einzelprozess (A,B,C,D,E) zu einer Verbesserung des Qualitätsparameters führt.

2. Verfahren nach Anspruch 1, bei dem in Schritt c) der Sollwert (S_A, S_DE) folgendermaßen ermittelt wird:
i) Simulation des Einzelprozesses (A) oder/und einer Gruppe von Prozessen (D,E) unter Verwendung einer Regelung, wobei die Messgröße (D_A, D_DE) als Parameter in der Simulation verwendet wird;
ii) Berechnung eines simulierten Qualitätsparameters mittels der Simulation;
iii) Verwenden des simulierten Qualitätsparameters als Sollwert (S_A, S_DE).

3. Verfahren gemäß einem der vorangehenden Ansprüche, bei dem der der Messgröße entsprechende Qualitätsparameter anhand des tatsächlich erstellten Produkts ermittelt wird.

4. Verfahren gemäß einem der vorangehenden Ansprüche, bei dem das Ermitteln (DET) gemäß Schritt b), das Vergleichen (COMP) gemäß Schritt c) und das Evaluieren (EVAL) gemäß Schritt d) zeitlich parallel zum realen Produktionsprozess (F) erfolgt.

5. Verfahren gemäß einem der vorangehenden Ansprüche 2 bis 4, bei dem bei der Simulation zumindest ein weiterer Einzelprozess (A,B,C,D,E) berücksichtigt wird, der verschieden von dem Einzelprozess ist, aus dem die Messgröße (D_A, D_DE) stammt.

6. Verfahren gemäß einem der vorangehenden Ansprüche 2 bis 5, bei dem bei der Simulation der gesamte Anteil des Produktionsprozesses berücksichtigt wird, welcher den Qualitätsparameter beeinflusst.

7. Verfahren gemäß einem der vorhergehenden Ansprüche mit folgendem weiteren Schritt:
e) Erstellen eines Änderungsvorschlags (P_F) in Abhängigkeit von der Evaluierung, der die Verwendung eines Regelkreises beinhaltet;
f) Anpassen des realen Einzelprozesses (A) und/oder der Gruppe von Prozessen (D,E) gemäß dem Änderungsvorschlag.

8. Verfahren gemäß einem der vorhergehenden Ansprüche, bei dem ein Weiterleiten der Messgröße (D_A, D_DE) an eine Vergleichseinheit erfolgt, insbesondere ein Edge Device, und in der Vergleichseinheit das Ermitteln (DET) gemäß Schritt b), das Vergleichen (COMP) des ermittelten Qualitätsparameters in Schritt c) und das Evaluieren (EVAL) gemäß Schritt d) erfolgt.

9. Verfahren gemäß einem der vorhergehenden Ansprüche, bei dem die Messgröße Sensordaten zumindest eines Sensors enthält.

10. Verfahren gemäß einem der vorhergehenden Ansprüche, bei dem die Messgröße einen zeitlichen oder/und spektralen Verlauf von Sensordaten zumindest eines Sensors umfasst oder/und von den Sensordaten des zumindest einen Sensors abgeleitete Werte.

11. Vorrichtung (U) zum Durchführen eines Verfahrens gemäß einem der Ansprüche 1 bis 10 mit
a) einer Sensorschnittstelle (SI) zum Erfassen von Messgrößen;
b) einer Prozessoreinheit (CPU) zum Vergleichen eines ermittelten Qualitätsparameters für zumindest einen Einzelprozess (A,B,C,D,E) mit einem Sollwert (S_A, S_DE);
c) einer Empfangsschnittstelle (RI) zum Empfangen von Sollwerten (S_A, S_DE) und
d) einer Ausgabeschnittstelle (OI) zur Ausgabe eines Änderungsvorschlags (P_F).

12. Vorrichtung (U) nach Anspruch 11, welche als Edge Device realisiert ist.

13. Computer Programm Produkt zum Durchführen einer Methode gemäß einem der Ansprüche 1 bis 10.

14. Computerlesbares Speichermedium mit einem Computer Programm Produkt gemäß dem vorhergehenden Anspruch 13.

15. System umfassend eine Vorrichtung gemäß den Ansprüchen 11 oder 12, eine Maschine (FM) zum Durchführen zumindest eines Einzelprozesses (A,B,C,D,E) im Produktionsprozess (F) eines Produkts, wobei die Maschine (FM) Messgrößen (D_A, D_DE) des zumindest einen Einzelprozesses (A,B,C,D,E) mit der Vorrichtung (U) austauscht und die Vorrichtung (U) weiterhin Information in Bezug auf einen Sollwert, insbesondere eine Transferfunktion für eine Regelung, mit einem Datenspeicher (DB) austauscht.
